# EUROPEAN PATENT APPLICATION

(11) **EP 2 075 075 A2**
(43) Date of publication of application: **01.07.2009**
(21) Application number: 08172982.4
(22) Date of filing: 29.12.2008
(51) Int. Cl.: B05D 7/00

(54) **Method for forming multi-layered coating film and an multi-layered coating film obtained thereof**

(30) Priority: 25.12.2007 JP 2007332252
(71) Applicant: Nippon Paint Co., Ltd., Osaka-shi Osaka 531-8511 (JP); Mazda Motor Corporation, Fuchu-cho Aki-gun Hiroshima 730-8670 (JP)
(72) Inventor: Kakii, Takuhiro, Neyagawa-shi Osaka Hiroshima 572-8501 (JP); Ichimura, Hideki, Minami-ku Hiroshima-shi Hiroshima 734-0057 (JP); Sasaki, Shigeyuki, Neyagawa-shi Osaka 572-8501 (JP); Koga, Kazuhi, Aki-gun Hiroshima 730-8670 (JP); Matsuda, Takaomi, Aki-gun Hiroshima 730-8670 (JP)
(74) Representative: Perry, Robert Edward

(57) **Abstract**

An object of the present invention relates to provide a method for forming a multi-layered coating film including a step of baking and curing an uncured intermediate coating film, an uncured base coating film and an uncured clear coating film at the same time which can give a multi-layered coating film excellent in gloss and in appearance, and to provide a multi-layered coating film obtained thereof.

The present invention provides to a method for forming a multi-layered coating film in three-coat and one-bake coating method, using a solvent-borne intermediate coating composition containing an urethane-modified polyester resin (a) having a water tolerance value of 4 to 10 ml, a melamine resin (b) having a hexane tolerance value of 8 to 40 ml, a blocked isocyanate compound (c) and a nonaqueous dispersion resin (d), and a water-borne base coating composition containing an emulsion resin and a pigment.

## Description

This application has priority rights of Japanese patent application No.2007-332252, filed December 25, 2007, which is herein incorporated by references.

### BACKGROUND OF THE INVENTION

The present invention relates to a method for forming a coating film by baking and curing a three-layers of an uncured intermediate coating film, an uncured base coating film and an uncured clear coating film at the same time, and an multi-layered coating film obtained thereof.

Based on current environmental consideration in automobile coating, three-coat and one-bake coating method including a step of successively coating in a wet-on-wet manner of an intermediate coating composition, a base coating composition and a clear coating composition formed thereon without heat-curing, and a step of baking and curing the three-layers of an uncured intermediate coating film, an uncured base coating film and an uncured clear coating film at the same time on behalf of a conventional two-coat and one-bake coating method in successively coating of an intermediate coating composition, a base coating composition and a clear coating composition. The three-coat and one-bake coating method is disclosed in the publication of Japanese Patent Application Kokai (JP-A) No. 2003-211085. The three-coat and one-bake coating method can provide curtailment of a baking and drying oven for an intermediate coating film, which can provide shortening of coating line and has an advantage of coating facility. The three-coat and one-bake coating method also has an advantage of energy expenditure for coating and can provide economic advantage because the coating method has curtailment of a baking and drying oven for an intermediate coating film.

However, the three-coat and one-bake coating method often has flooding problem between an uncured intermediate coating film and an uncured base coating film because the coating method has a step of applying an base coating composition on an uncured intermediate coating film. The flooding problem furthermore may provide so-called gloss decrement caused by disappearance of gloss of a multi-layered coating film. Therefore, it is difficult in the three-coat and one-bake coating method to obtain a multi-layered coating film having excellent appearance which is comparable with appearance of a multi-layered coating film obtained by two-coat and one-bake coating method.

On the other hand, environmental impact of exhaust volatile organic compound has been a problem in automobile coating. A base coating composition contains maximum amount of volatile organic compound in an automobile coating composition of an intermediate coating composition, a base coating composition and a clear coating composition because commonly-used base coating composition is mixed with large amount of dilution solvent so as to have lower viscosity and to obtain a flat and smooth coating film. Thus, changing from a solvent-borne base coating composition to a water-borne base coating composition has been an urgent task in order to reduce environmental impact. A manner for preventing flooding in using a water-borne base coating composition includes incompatibilization between an uncured intermediate coating film and an uncured base coating film. However, it has turned out that the incompatibilization between an uncured intermediate coating film and an uncured base coating film by deceasing compatibility of an intermediate coating composition and a base coating composition may occur a problem of so-called bleeding of emergence of an intermediate coating film on an base coating film.

Japanese Patent Application Kokai (JP-A) No. 2007-75791 discloses a method for forming a multi-layered coating film which comprises a step of successively coating, on an elecrocoating film formed on a substrate, an intermediate coating composition, a base coating composition and a clear coating composition formed thereon, and a step of baking and curing the coated three-layers at the same time, wherein the base coating composition comprises a crosslinking polymer microparticles and a nonaqueous dispersion resin. The present invention is different from the invention described in JP-A 2007-75791 because each of the intermediate coating composition and the base coating composition in JP-A 2007-75791 is a solvent-borne coating composition. Furthermore, using a water-borne base coating composition in making a multi-layered coating film has a problem of occurring grievous flooding and bleeding between a solvent-borne intermediate coating composition and a water-borne base coating composition to deteriorate resulting multi-layered coating film.

### SUMMARY OF THE INVENTION

It is an object of the present invention to provide a method for forming a multi-layered coating film including a step of baking and curing an uncured intermediate coating film, an uncured base coating film and an uncured clear coating film at the same time which can give a multi-layered coating film excellent in gloss and in appearance, and to provide a multi-layered coating film obtained thereof.

The present invention provides a method for forming a multi-layered coating film, which includes:
a step (1) of successively coating, on an elecrocoating film formed on a substrate, of an intermediate coating composition, a base coating composition and a clear coating composition formed thereon to form an uncured intermediate coating film, an uncured base coating film and an uncured clear coating film, and
a step (2) of baking and curing the uncured intermediate coating film, the uncured base coating film and the uncured clear coating film of step (1) at the same time, wherein
the intermediate coating composition is a solvent-borne intermediate coating composition contains;
40 to 56% by weight of an urethane-modified polyester resin (a) having a number average molecular weight (Mn) of 1500 to 3000 and a water tolerance value of 4 to 10 ml at 23 °C, obtained by reacting an aliphatic diisocyanate compound with a hydroxyl group-containing polyester resin having a glass transition temperature (Tg) of 40 to 80 °C, the polyester being obtained by polycondensation of an acid component containing 80 mol% or more of isophthalic acid with a polyhydric alcohol;
10 to 30% by weight of a melamine resin (b) having a hexane tolerance value of 8 to 40 ml;
15 to 30% by weight of a blocked isocyanate compound (c) obtained by a blocking reaction of a compound having an active methylene group with hexamethylene diisocyanate or an isocyanate compound obtained by reacting hexamethylene diisocyanate with a compound reacted with the hexamethylene diisocyanate, and;
4 to 15% by weight of a nonaqueous dispersion resin (d) having a core-shell structure;
provided that amounts of (a) to (d) are on the bases of a resin solid content; and
0.4 to 2 parts by weight of a flat pigment (e) having a long diameter of 1 to 10 µm and a number average particle diameter of 2 to 6 µm, which the parts by weight of the flat pigment (e) is based on 100 parts by weight of the resin solid content; and wherein
the base coating composition is a water-borne base coating composition containing;
an emulsion resin obtained by emulsion polymerization of an α,β-ethylenically unsaturated monomer mixture having an acid value of 3 to 50 mg KOH/g and containing at least 65% by weight of a (meth)acrylate ester whose ester moiety contains one or two carbon atoms, and
a pigment.
The above object can be attained by the method.

The present invention also provides a multi-layered coating film obtainable from the above method for forming a multi-layered coating film.

In the method of the present invention, formation of multi-layered coating film excellent in gloss and in appearance by so-called three-coat and one-bake coating method can be achieved by a combination using of the intermediate coating composition containing a urethane-modified polyester resin having specific numeric property value, a melamine resin having specific numeric property value, a blocked isocyanate compound, a nonaqueous dispersion resin and a flat pigment, and the water-borne base coating composition containing a specific emulsion resin. For details of the present invention, a solvent-borne intermediate coating composition containing the above specific components and a water-borne base coating composition containing a specific emulsion resin are used in a three-coat and one-bake coating method. The use of the above solvent-borne intermediate coating composition and the above water-borne base coating composition can achieve resolution of flooding problem which may occurs in a step of applying a base coating composition on an uncured intermediate coating film. Furthermore, the use of an urethane-modified polyester resin having a specific range of a water tolerance value and a melamine resin having a specific range of a hexane tolerance value in the intermediate coating composition can prevent bleeding problem between an intermediate coating film and a base coating film. A multi-layered coating film of the present invention is provided by the above method, and thus has excellent coating appearance having excellent smoothing and having no defect such as bleeding.

### DETAILED DESCRIPTION OF THE PREFERRED EMBODIMENTS

The first step of the method for forming a multi-layered coating film according to the present invention is a step (1) of successively coating, on an elecrocoating film formed on a substrate, of an intermediate coating composition, a base coating composition and a clear coating composition formed thereon.
The step (1) includes:
applying an intermediate coating composition on an electrodeposition coating film formed on a substrate to obtain an uncured intermediate coating film (stage (i)); applying a base coating composition on the uncured intermediate coating film obtained by the stage (i) to obtain an uncured base coating film (stage (ii)); and
applying a clear coating composition on the uncured base coating film obtained by the stage (ii) to obtain an uncured clear coating film (stage (iii)).

### STEP (1)

### STAGE (i)

The stage (i) forms an uncured intermediate coating film by applying an intermediate coating composition on an electrodeposition coating film formed on a substrate. An intermediate coating film has various functions of hiding asperity of an electrodeposition coating film, improving smoothing of resulting multi-layered coating film, and controlling physical property of a multi-layered coating film such as chipping resistance.

The substrate having an electrodeposition coating film may include, for example, metal products having an electrodeposition coating film formed by cation-electrodeposition coating or anion-electrodeposition coating, which has no specific limitation. The metal products may include, for example, iron, copper, aluminum, tin, zinc and alloyed metal thereof. Concrete examples of the metal products may include, for example, automotive body or parts of car, truck, motorcycle, bus and so on. The metal products which are treated by chemical conversion agent such as phosphate, zirconium or chromate may be preferably used.

### INTERMEDIATE COATING COMPOSITION

The intermediate coating composition used in the present invention is a solvent-borne coating composition containing an urethane-modified polyester resin (a), a melamine resin (b), a blocked isocyanate compound (c), a nonaqueous dispersion resin (d) and a flat pigment (e).

### Urethane-modified polyester resin (a)

The urethane-modified polyester resin (a) has characteristics that its number average molecular weight (Mn) is 1500 to 3000 and its water tolerance value at 23 °C is 4 to 10 ml. When the number average molecular weight (Mn) is less than 1500, working property in application and curability of resulting coating film are degraded. When the number average molecular weight (Mn) is more than 3000, working property in application are degraded because of increase of dilution rate in application. The number average molecular weight (Mn) may preferably be 1200 to 2500, which can provide good working property in application and curability. As used herein, the number average molecular weight is measured by gel permeation chromatography (GPC) and is a number average molecular weight based on polystyrene.

When the water tolerance value at 23 °C of the urethane-modified polyester resin (a) is less than 4 ml, wettability between an uncured intermediate coating film and an uncured base coating film is degraded, which causes bleeding problem and deterioration of coating smoothing. When the water tolerance value at 23 °C is more than 10 ml, flooding between an uncured intermediate coating film and an uncured base coating film occurs, which deteriorates appearance of resulting coating film. The water tolerance value serves to evaluate the degree of hydrophilicity; a higher value means a higher degree of hydrophilicity. The method of measuring the water tolerance value includes dispersing, with stirring, 0.5 g of the urethane-modified polyester resin (a) in 10 ml of acetone placed in a 100-ml beaker at 23 °C, adding gradually ion-exchanged water to the mixture using a burette, and measuring the amount (ml) of ion-exchanged water required for this mixture to become turbid. This ion-exchanged water amount (ml) is defined as the water tolerance value.

The present invention relates to a invention which resolves both flooding problem and bleeding problem between an uncured intermediate coating film and an uncured base coating film in three-coat and one-bake coating method including baking step of an uncured intermediate coating film, an uncured base coating film and an uncured clear coating film, and provides a multi-layered coating film having excellent smoothing of the coating film. In the present invention, the use of a solvent-borne intermediate coating composition and a water-borne base coating composition can achieve resolution of flooding problem which may occur in a step of applying a base coating composition on an uncured intermediate coating film. Furthermore, the limitation of the water tolerance value of the urethane-modified polyester resin (a) within the range of 4 to 10 ml can achieve good wettability between an uncured intermediate coating film and an uncured base coating film, and prevention of bleeding problem between an uncured intermediate coating film and an uncured base coating film.

The urethane-modified polyester resin (a) may preferably have a hydroxyl value (solid content) of 30 to 180. When the hydroxyl value is less than 30, curability of resulting coating film may be deteriorate. When the hydroxyl value is more than 180, water resistance of resulting coating film may deteriorate. The hydroxyl value may more preferably be in the range of 40 to 160, which can provide excellent curability and water resistance of resulting coating film.

The urethane-modified polyester resin (a) may preferably have an acid value (solid content) of 3 to 30 mg KOH/g. When the acid value is less than 3 mg KOH/g, curability of resulting coating film may be deteriorate. When the acid value is more than 30 mg KOH/g, water resistance of resulting coating film may deteriorate. The acid value may more preferably be in the range of 5 to 25 mg KOH/g, which can provide excellent curability and water resistance of resulting coating film.

The urethane-modified polyester resin (a) can be obtained by reacting a hydroxy group-containing polyester resin with an aliphatic diisocyanate compound.

The hydroxy group-containing polyester resin may be usually produced by polycondensation of an acid component with a polyhydric alcohol, and the acid component contains isophthalic acid. When the amount of isophthalic acid in the acid component is less than 80 mol%, the glass transition temperature (Tg) of the obtained hydroxyl group-containing polyester resin may be lowered, which causes lowering of hardness of resulting coating film. The amount of isophthalic acid in the acid component may preferably be greater than or equal to 85 mol%.

Examples of the acid component other than isophthalic acid include, but not particularly limited to, phthalic acid, phthalic acid anhydride, tetrahydrophthalic acid, tetrahydrophthalic acid anhydride, hexahydrophthalic acid, hexahydrophthalic acid anhydride, methyltetrahydrophthalic acid, methyltetrahydrophthalic acid anhydride, hymic acid anhydride, trimellitic acid, trimellitic acid anhydride, pyromellitic acid, pyromellitic acid anhydride, terephthalic acid, maleic acid, maleic acid anhydride, fumaric acid, itaconic acid, adipic acid, azelaic acid, sebacic acid, succinic acid, succinic acid anhydride, dodecenylsuccinic acid and dodecenylsuccinic acid anhydride.

Examples of the polyhydric alcohol used in preparing the hydroxyl group-containing polyester resin include, but not particularly limited to, ethylene glycol, diethylene glycol, polyethylene glycol, propylene glycol, dipropylene glycol, polypropylene glycol, neopentyl glycol, 1,2-butanediol, 1,3-butandiol, 1,4-butanediol, 2,3-butanediol, 1,5-pentanediol, 1,6-hexanediol, 1,4-cyclohexanediol, 2,2-dimethyl-3-hydroxypropyl-2,2-dimethyl-3-hydroxypropionate, 2,2,4-trimethyl-1,3-pentanediol, polytetramethylene ether glycol, polycaprolactonepolyol, glycerin, sorbitol, annitol, trimethylolethane, trimethylolpropane, trimethylolbutane, hexanetriol, pentaerythritol and dipentaerythritol.

In addition to the above polyvalent carboxylic acid and/or acid anhydride and the polyhydric alcohol component, other reactive components may be used in the preparation of the hydroxyl group-containing polyester resin. Examples of the above other reactive components include monocarboxylic acids, hydroxycarboxylic acids and lactones. Also, drying oil, semi-drying oil and fatty acids of these oils may be used. Specific examples of these compounds include monoepoxide compounds such as Carjula E (manufactured by Shell Chemicals Japan Ltd.) and lactones. The above lactones are those that can be ring-opened and added to polyesters of polyvalent carboxylic acids and polyhydric alcohols to form a graft chain. Examples of the lactones include β-propiolactone, dimethylpropiolactone, butyllactone, γ-valerolactone, ε-caprolactone, γ-caprolactone, γ-caprylolactone, crotolactone, δ-valerolactone and δ-caprolactone. Among these compounds, ε-caprolactone may be most preferable.

The hydroxyl group-containing polyester resin has a glass transition temperature (Tg) of 40 to 80°C. When the glass transition temperature (Tg) is less than 40 °C, hardness of resulting coating film may be lowered. When the glass transition temperature is more than 80 °C, reduction in chipping resistance may be occurred. The glass transition temperature may more preferably be in the range of 45 to 75°C, which can provide excellent hardness of resulting coating film and chipping resistance. The glass transition temperature can be measured by heat analysis such as differential thermal analyzer (TG-DTA), or can be calculated based on monomer component and monomer composition of the hydroxy group-containing polyester resin.

Examples of the aliphatic diisocyanate compound may include, for example, hexamethylene diisocyanate, trimethylhexamethylene diisocyanate, cyclohexane-1,4-diisocyanate, dicyclohexylmethane-4,4-diisocyanate and methylcyclohexanediisocyanate. Among these compounds, hexamethylene diisocyanate and trimethylhexamethylene diisocyanate, and buret isomers, isocyanurate isomers and adduct isomers of the diisocyanate may be preferably used from the viewpoint of chipping resistance and weather resistance.

The urethane-modified polyester resin (a) can be obtained by reacting the hydroxyl group-containing polyester resin with the aliphatic diisocyanate compound in a conventional reaction technique in the art.

The content of the above urethane-modified polyester resin (a) in the intermediate coating composition in the present invention is 40 to 56% by weight based on the weight of the resin solid content. When the content of the urethane-modified polyester resin (a) is less than 40% by weight, the chipping resistance of the coating film is lowered. When the content exceeds 56% by weight, the hardness of resulting multi-layered coating film is reduced. The content of urethane-modified polyester resin (a) may preferably be in the range of 43 to 50% by weight.

### Melamine resin (b)

The melamine resin (b) of the present invention has a hexane tolerance value of 8 to 40 ml. When the hexane tolerance value is less than 8 ml, flooding between an uncured intermediate coating film and an uncured base coating film occurs, which deteriorates appearance of coating film. When the hexane tolerance value is more than 40 ml, bleeding of an intermediate coating film occurs, which deteriorates appearance of coating film. The hexane tolerance value may more preferablly be in the range of 10 to 35, which can provide excellent appearance of coating film. The hexane tolerance value serves to evaluate the degree of hydrophobicity; a higher value means a higher degree of hydrophobicity. The method of measuring the hexane tolerance value includes dispersing, with stirring, 0.5 g of the melamine resin (b) in 10 ml of acetone placed in a 100-ml beaker at 23 °C, adding gradually hexane to the mixture using a burette, and measuring the amount (ml) of hexane required for this mixture to become turbid. This hexane amount (ml) is defined as the hexane value.

In the present invention, the use of a solvent-borne intermediate coating composition and a water-borne base coating composition can achieve resolution of flooding problem which may occurs in a step of applying a base coating composition on an uncured intermediate coating film. Furthermore, the limitation of the water tolerance value of the urethane-modified polyester resin (a) within the above specific range can achieve good wettability between an uncured intermediate coating film and an uncured base coating film, and prevention of bleeding problem between an uncured intermediate coating film and an uncured base coating film. In this coating system, the inventors of the present invention have found that a range of the hexane tolerance value of the melamine resin (b) affects smoothing of resulting multi-layered coating film. Especially, the inventors have found that smoothing of resulting multi-layered coating film is deteriorated in case that the hexane tolerance value of the melamine resin (b) as a curing component is less than 8 ml, based on their experiment. This is due to water absorption by uncured intermediate coating film from applied water-borne base coating base composition, which causes deterioration of smoothing of coating film. In the present invention, the limitation of the hexane tolerance value of the melamine resin (b) within the above specific range in addition to the above constitution of the invention can achieve improvement of smoothing of coating film, as well as resolution of flooding problem and bleeding problem between an uncured intermediate coating film and an uncured base coating film.

In the present invention, the water tolerance is used as a specifying manner in the urethane-modified polyester resin (a), and the hexane tolerance is used as a specifying manner in the melamine resin (b). These manners are not the same as a titration manner of water and hexane to one component for measuring solubility parameter of the component. In the present invention for resolving both the flooding problem and the bleeding problem between an uncured intermediate coating film and an uncured base coating film, polarity of the urethane-modified polyester resin (a) as a main component of binder resin has effect on wettability of water-borne base coating composition for intermediate coating film, thus the polarity of the urethane-modified polyester resin (a) is specified by the water tolerance in the present invention. Similarly, polarity of the melamine resin (b) has effect on flooding between an uncured intermediate coating film and an uncured base coating film, thus the polarity of the melamine resin (b) is specified by the hexane tolerance. And the above specifying manners can provide the improvement of the above problems in the present invention.

A content of the melamine resin (b) in the intermediate coating composition is within a range of 10 to 30% by weight based on the weight of the resin solid content. When the content is less than 10% by weight, insufficient curability of the coating composition may be obtained. When the content is more than 30% by weight, the cured film may be excessively hardened and be hence fragile. The content of the melamine resin (b) may preferably be 15 to 25% by weight, which provides advantages of obtaining a coating film having excellent curability and chipping resistance.

### Blocked isocyanate compound (c)

The blocked isocyanate compound (c) includes those obtained by adducting a compound having an active methylene group to hexamethylene diisocyanate or an isocyanate compound, for example, a polymer such as a nurate isomer thereof, obtained by reacting hexamethylene diisocyanate with a compound which can be reacted with hexamethylene diisocyanate. When the blocked isocyanate compound (c) is heated, the block agent is dissociated to generate an isocyanate group and then the isocyanate group is reacted with a functional group in the above urethane-modified polyester resin to cure the resin. Examples of the above compound having an active methylene group include active methylene compounds such as acetylacetone, ethyl acetoacetate and ethyl malonate. Examples of the blocked isocyanate compound include a methylene type blocked isocyanate (trade name: "Duranate MF-K60X, manufactured by Asahi Kasei Corporation).

The content of the above blocked isocyanate compound (c) is 15 to 30% by weight based on the weight of the resin solid content. When the content is out of the above range, insufficient curing may be obtained. The content of the above blocked isocyanate compound (c) may preferably be 17 to 25% by weight, which provides advantages of excellent curability.

### Nonaqueous dispersion resin (d)

The nonaqueous dispersion resin (d) having a core-shell structure may be prepared as non-crosslinking resin particles insoluble in a mixed solution of a dispersion stable resin and an organic solvent by copolymerizing polymerizable monomers in the mixed solution. Also, the monomer to be copolymerized in the presence of a dispersion stabilizing resin to obtain the non-crosslinking resin particles is not particularly limited as long as it is a radically polymerizable unsaturated monomer.

In the synthesis of the above dispersion stabilizing resin and the nonaqueous dispersion resin (d), it is preferable to use a polymerizable monomer having a functional group. This is because the nonaqueous dispersion resin (d) having a functional group can react with a curing agent described below together with the dispersion stabilizing resin having functional group to form a three-dimensionally crosslinked coating film.

The dispersion stabilizing resin is not particularly limited as long as the nonaqueous dispersion resin (d) can be synthesize stably in an organic solvent. As the dispersion stabilizing resin, specifically, it is preferable to use an acryl resin, polyester resin, polyether resin, polycarbonate resin, polyurethane resin or the like having a hydroxyl value (solid content) of 10 to 250 and preferably 20 to 180, an acid value (solid content) of 0 to 100 mg KOH/g and preferably 0 to 50 mg KOH/g and a number average molecular weight of 800 to 100000 and preferably 1000 to 20000. When each property exceeding each of the upper limits, handling characteristics of the resin may be reduced and handling characteristics of the nonaqueous dispersion itself may be reduced. When each property less than each of the lower limits, detachment of the resin and reduced stability of particles in the coating film formed of the resin may be obtained.

Preferable examples of a method of synthesizing the dispersion stabilizing resin include, but not particularly limited to, a method in which the dispersion stabilizing resin is obtained by radical polymerization in the presence of a radical polymerization initiator, and a method in which the dispersion stabilizing resin is obtained by a condensation reaction or an addition reaction. A proper monomer may be selected as the monomer used in obtaining the above dispersion stabilizing resin corresponding to the properties of the resin. It is however preferable to use monomers having a functional group such as a hydroxyl group and an acid group contained in the polymerizable monomer used in synthesizing a nonaqueous dispersion described below. Monomers further having functional groups such as a glycidyl group and an isocyanate group may be used, if needed.

In the preparation of the nonaqueous dispersion resin (d), the structural ratio of the dispersion stabilizing resin to the polymerizable monomer may be optionally selected corresponding to the purpose. For example, the ratio of the dispersion stabilizing resin may preferably be 3 to 80% by weight and particularly preferably 5 to 60% by weight and the ratio of the polymerizable monomer may preferably be 97 to 20% by weight and particularly preferably 95 to 40% by weight based on the total weight of both the components. A total concentration of the dispersion stabilizing resin and the polymerizable monomer in an organic solvent may preferably be 30 to 80% by weight and particularly preferably 40 to 60% by weight based on the total weight.

The nonaqueous dispersion resin (d) can be obtained by polymerizing radical polymerizable monomer in the presence of the dispersion stabilizing resin. The nonaqueous dispersion resin (d) obtained in this manner may preferably have a hydroxyl value (solid content) of 50 to 400 and preferably 100 to 300, an acid value (solid content) of 0 to 200 mg KOH/g and preferably 0 to 50 mg KOH/g and an average particle diameter (D₅₀) of 0.05 to 10 µm and preferably 0.1 to 2 µm. When the value is less than each of the lower limits, the shape of particles maynot be maintained. When a value exceeds each of the upper limits, the stability of the resin may deteriorate when it is dispersed in the coating composition. The average particle diameter (D₅₀) can be measured using dynamic light scattering method, more specifically, UPA produced by Nikkiso Co., Ltd.

Typical examples of the polymerizable monomer having a functional group are given below. Examples of the polymerizable monomer having a hydroxyl group include hydroxyethyl (meth)acrylate, hydroxypropyl (meth)acrylate, hydroxybutyl (meth)acrylate, hydroxymethylmethacrylate, allyl alcohol and an adduct of hydroxyethyl (meth)acrylate and ε-caprolactone.

On the other hand, examples of the polymerizable monomer having an acid group include polymerizable monomers having a carboxyl group, sulfonic acid group or the like. Examples of the polymerizable monomer having a carboxyl group include a (meth)acrylic acid, crotonic acid, ethaacrylic acid, propylacrylic acid, isopropylacrylic acid, itaconic acid, maleic acid anhydride and fumaric acid. Examples of the polymerizable monomer having a sulfonic acid group include t-butylacrylamidosulfonic acid. When the polymerizable monomer having an acid group is used, a part of the acid group may preferably be a carboxyl group.

Examples of the polymerizable monomer having a functional group include, other than the above compounds, glycidyl group-containing unsaturated monomers such as glycidyl (meth)acrylate and isocyanate group-containing unsaturated monomers such as m-isopropenyl-α,α-dimethylbenzylisocyanate and isocyanatoethylacrylate.

Examples of other polymerizable monomers include alkyl (meth)acrylate esters such as methyl (meth)acrylate, ethyl (meth)acrylate, isopropyl (meth)acrylate, n-propyl (meth)acrylate, n-butyl (meth)acrylate, t-butyl (meth)acrylate, isobutyl (meth)acrylate, 2-ethylhexyl (meth)acrylate, n-octyl (meth)acrylate, lauryl (meth)acrylate, stearyl (meth)acrylate and tridecyl (meth)acrylate, adduct products of fatty acids and (meth)acrylate monomers having an oxirane structure (for example, an adduct product of stearic acid and glycidylmethacrylate), adduct products of an oxirane compound having an alkyl group having 3 or more carbon atoms and an (meth)acrylic acid, polymerizable monomers such as styrene, α-methylstyrene, o-methylstyrene, m-methylstyrene, p-methylstyrene, p-t-butyl styrene, benzyl (meth)acrylate, itaconatic acid ester (for example, dimethyl itaconate), maleic acid ester (for example, dimethyl maleate) and fumaric acid ester (for example, dimethyl fumarate), and other than the above, acrylonitrile, methacrylonitrile, methyl isopropenyl ketone, vinyl acetate, Beobe monomer (manufactured by Shell Chemicals Japan Ltd.), vinyl propionate, vinyl pivalate, ethylene, propylene, butadiene, N,N-dimethyl aminoethyl acrylate, N,N-dimethyl aminoethyl methacrylate, acrylamide and vinylpyridine.

The polymerization reaction to obtain the above nonaqueous dispersion may preferably be performed in the presence of a radical polymerization initiator. Examples of the radical polymerization initiator include azo type initiators such as 2,2'-azobisisobutyronitrile and 2,2'-azobis(2,4-dimethylvaleronitrile), and benzoyl peroxide, lauryl peroxide and t-butyl peroctoate. The amount of these initiators used may preferably be 0.2 to 10 parts by weight and more preferably 0.5 to 5 parts by weight based on 100 parts by weight of all polymerizable monomers. The polymerization reaction to obtain the nonaqueous dispersion in the organic solvent containing the dispersion stabilizing resin may preferably be performed at a temperature range of about 60 to 160°C for about 1 to 15 hours.

The above nonaqueous dispersion has the characteristics that though it is a particle component in the coating composition but does not form a particle structure in the coating film unlike in the case of the crosslinking polymer microparticles. Namely, the nonaqueous dispersion is different from the crosslinking polymer particles in the point that it is changed in the shape of particles in the baking step, enabling the formation of a resin component because no crosslinking part is present in the nonaqueous dispersion particle.

The resin particles called NAD (Non Aqueous Dispersion, nonaqueous type polymer dispersion solution) described in, for example, Colorant, vol. 48 (1975), pp28-34 may also be used as the nonaqueous dispersion.

The content of the nonaqueous dispersion resin (d) in the coating composition according to the present invention is 4 to 15% by weight based on the weight of the resin solid content. When the content is less than 4% by weight, insufficient appearance of the overall coating film may be obtained. When the content exceeds 15% by weight, deterioration in chipping properties may be obtained. This content is preferably 5 to 12% by weight, which provides advantages of obtaining a coating film having excellent appearance and chipping resistance.

### Flat pigment (e)

The flat pigment (e) has a long diameter of 1 to 10 µm and a number average particle diameter of 2 to 6 µm. When the long diameter of the flat pigment is out of the above range, the appearance of the coating film may be deteriorates and it may be difficult to develop sufficient anti-chipping properties. Also, when the number average particle diameter is out of the above range, the appearance of the coating film may deteriorate and it may be difficult to develop sufficient chipping resistance properties. The number average particle diameter of the flat pigment (e) can be measured by laser diffractometry and light scattering method, more specifically, micro-track produced by Nikkiso Co., Ltd. Examples of the flat pigment (e) may include mica, alumina, talc and silica. Among these materials, talc is preferably used. This is because the chipping properties of the coating film can be improved.

The content of the above flat pigment (e) is 0.4 to 2 parts by weight based on 100 parts of the resin solid content in the coating composition. When the content is out of the above range, a reduction in adhesion to the undercoat may be occurred and sufficient chipping resistance properties may not be obtained. This content is more preferably 0.5 to 1.5 parts by weight, which provides excellent chipping resistance properties.

### Other components

The intermediate coating composition may further contain other components in addition to the urethane-modified polyester resin (a), the melamine resin (b), the blocked isocyanate compound (c), the nonaqueous dispersion resin (d) and the flat pigment (e). Examples of the above other components include other resin components, coloring pigments, extender pigments, viscosity control agents and conventional additives which is used for conventional coating composition.

Examples of other resin components which may be used include, though not limited to, acryl resin, polyester resin, alkyd resin and epoxy resin. These resins may be used either alone or in combination of two or more.

Examples of the coloring pigment include organic type azo chelate type pigments, insoluble azo type pigments, condensed azo type pigments, phthalocyanine type pigments, indigo pigments, perinone type pigments, perylene type pigments, dioxane type pigments, quinacridone type pigments, diketopyrrolopyrrole type pigments, benzimidazolone type pigments, isoindolinone type pigments and metal complex pigments, and inorganic type coloring pigment including chrome yellow, yellow iron oxide, red iron oxide, carbon black and titanium dioxide.

Generally, a gray type coating composition containing carbon black and titanium dioxide as major pigments may be used in the intermediate coating composition. In addition, a intermediate coating composition containing pigments that well matches with the hue of an upper coating film and a combination of various coloring pigments may be used.

Moreover, as the extender pigments, calcium carbonate, barium sulfate, aluminum powders, kaolin and the like may be used.

A viscosity control agent may be further added to the intermediate coating composition. As the viscosity control agent, a compound exhibiting thixotropic property may be compounded. Examples of the viscosity control agent may include polyamide type such as a swollen dispersion of fatty acid amide, amide type fatty acid and long-chain polyaminoamide phosphate salts, polyethylene type such as a colloid-like swollen dispersion of polyethylene oxide, organic acid smectite clay, organic bentonite type such as montmorillonite, inorganic pigments such as aluminum silicate and barium sulfate, flat pigments developing viscous nature according to their shapes and crosslinking resin particles.

Examples of the additives include a surface regulator, antioxidant and deformer agent. A content of the additives are known to skilled persons.

### Preparation of intermediate coating composition and forming of uncured intermediate coating film

As a method of preparing the intermediate coating composition used in the present invention, all the methods which are known to skilled persons such as a method in which ingredients including pigments are kneaded and dispersed using a kneader or roll or SG mill may be used, and are not particularly limited. In particular, a method including pre-mixing of all or partial amounts of the urethane-modified polyester resin (a) and pigment components to obtain a pigment paste, and mixing the resultant pigment paste and the other components can be used.

In the preparation of the intermediate coating composition, conventional organic solvents may be used. Examples of the organic solvents include:
aromatic solvents such as toluene, xylene and solvesso; aliphatic solvents such as n-pentane, n-hexane, n-heptane, n-octane, cyclohexane, methylcyclohexane and mineralspirit; ketone solvents such as methyl ethyl ketone, acetone, methyl isobutyl ketone and cyclohexanone;
ether solvents such as diethylether, isopropylether, tetrahydrofuran, dioxane, ethylene glycol dimethylether, ethylene glycol diethylether, diethylene glycol dimethylether, diethylene glycol diethylether, propylene glycol monomethylether, anisole and phenetole;
ester solvents such as ethyl acetate, butyl acetate, isopropyl acetate and ethylene glycol diacetate;
cellosolve solvents such as methyl cellosolve, ethyl cellosolve and butyl cellosolve;
alcohol solvents such as methanol, ethanol, propanol, isopropyl alcohol, butanol, 2-ethyl hexanol; and so on. These solvents may be used alone or a mixed thereof
The solvents may be used as a dilution agent for the intermediate coating composition in applying.

A total solid content of the intermediate coating composition used in the present invention during coating may preferably be 30 to 80% by weight. When the content is out of this range, deterioration in coating stability may be occurred. In addition, when the content is less than 30% by weight, the viscosity may be too low, and appearance inferiors such as flooding and mottling may be occurred. When the content is more than 80% by weight, the viscosity may be too high, and which may lead to deteriorated appearance of the coating film. The total solid content of the intermediate coating composition may more preferably be 35 to 65% by weight, which can provide excellent coating appearance.

Applying method of the intermediate coating composition includes, but not particularly limited to, a coating method using, for example, air electrostatic spray coating such as generically called "react gun", and rotary-atomizing-type air electrostatic spray coating such as generically called "micro-micro bel", "micro bel" or "meta-bel". A film thickness of the intermediate coating films using the intermediate coating composition are usefully 5 to 50µm as dry coating film thickness.

The intermediate coating film obtained by the above stage (i) is in an uncured state. The uncured state includes a state after preheating for 1 to 15 minutes at a temperature (e.g., from room temperature to 100 °C) which is lower than heating and curing temperature of coating film. The preheating may be preferably carried out after the above stage (i). The preheating can volatilize volatile components such as organic solvents contained in the intermediate coating composition, which can prevent flooding between the uncured intermediate coating film and an uncured base coating film obtained in the following stage (ii) to obtain a multi-layered coating film having excellent gloss. The method of the present invention moves on the following stage (ii) after the above stage (i), or optional preheating after the above stage (i).

### STAGE (ii)

The stage (ii) forms an uncured base coating film on the uncured intermediate coating film by applying a base coating composition on the uncured intermediate coating film obtained by the stage (i). A base coating film has various functions such as protection function and designing function to the substrate.

### BASE COATING COMPOSITION

The base coating composition used in the present invention is a water-borne base coating composition containing a pigment and an emulsion resin obtained by emulsion polymerization of an α,β-ethylenically unsaturated monomer. The base coating composition used in the present invention is a water-borne base coating composition containing a pigment and an emulsion resin obtained by emulsion polymerization of an α,β-ethylenically unsaturated monomer mixture having an acid value of 3 to 50 mg KOH/g and containing at least 65% by weight of a (meth)acrylate ester whose ester moiety contains one or two carbon atoms. Using the above specific base coating composition in combination with the above solvent-borne intermediate coating composition in a three-coat and one-bake coating method can achieve a forming of a multi-layered coating film having excellent gloss and excellent coating appearance.

The α,β-ethylenically unsaturated monomer mixture contains at least 65% by weight of a (meth)acrylate ester whose ester moiety contains one or two carbon atoms. When the content of the (meth)acrylate ester is less than 65% by weight, the multi-layered coating film obtained may be poor in appearance. The (meth)acrylate ester whose ester moiety contains one or two carbon atoms includes, within the meaning thereof, methyl (meth)acrylate and ethyl (meth)acrylate. The term "(meth)acrylate ester" includes both an acrylate ester and an methacrylate ester.

The α,β-ethylenically unsaturated monomer mixture may have an acid value and a hydroxyl value in case that the α,β-ethylenically unsaturated monomer mixture contains an α,β-ethylenically unsaturated monomer having acid group and/or hydroxyl group.

The above α,β-ethylenically unsaturated monomer mixture has an acid value (solid content) of 3 to 50 mg KOH/g, preferably 7 to 40 mg KOH/g. When the acid value is less than 3 mg KOH/g, the workability in coating becomes unsatisfactory. When it exceeds 50 mg KOH/g, the performance characteristics of the coating film obtained will deteriorate.

The above α,β-ethylenically unsaturated monomer mixture has an hydroxyl value (solid content) of 10 to 150, preferably 20 to 100. When the hydroxyl value is less than 10, no improvement in curability may possibly be attained. When it exceeds 150, water resistance of resulting coating film may deteriorate. The glass transition temperature (Tg) of a polymer obtained by polymerization of the above α,β-ethylenically unsaturated monomer mixture may preferably be within the range of -20 to 80 °C from the viewpoint of physical properties of the coating film obtained.

As an acid group-containing α,β-ethylenically unsaturated monomer, there may specifically be mentioned acrylic acid, methacrylic acid, acrylic acid dimer, crotonic acid, 2-acryloyloxyethylphthalic acid, 2-acryloyloxyethylsuccinic acid, ω-carboxy-polycaprolactone mono(meth)acrylate, isocrotonic acid, α-hydro-ω-[(1-oxo-2-propenyl)oxy]poly[oxy(1-oxo-1,6-hex- anediyl)], maleic acid, fumaric acid, itaconic acid, 3-vinylsalicylic acid, 3-vinylacetylsalicylic acid, 2-acryloyloxyethyl acid phosphate, 2-acrylamido-2-methylpropanesulfonic acid, and the like. Preferred among these are acrylic acid, methacrylic acid, and acrylic acid dimer.

A hydroxyl group-containing α,β-ethylenically unsaturated monomer includes hydroxyethyl (meth)acrylate, hydroxypropyl (meth)acrylate, hydroxybutyl (meth)acrylate, allyl alcohol, methacryl alcohol, and adducts of hydroxyethyl (meth)acrylate and ε-caprolactone. Preferred among them are hydroxyethyl (meth)acrylate, hydroxybutyl (meth)acrylate, and adducts of hydroxyethyl (meth)acrylate and ε-caprolactone.

The above α,β-ethylenically unsaturated monomer mixture may further contain one or more of other α,β-ethylenically unsaturated monomers, for example (meth)acrylate esters whose ester moiety contains 3 or more carbon atoms (e.g. n-butyl (meth)acrylate, isobutyl (meth)acrylate, tert-butyl (meth)acrylate, 2-ethylhexyl (meth)acrylate, lauryl (meth)acrylate, phenyl (meth)acrylate, isobornyl (meth)acrylate, cyclohexyl meth(acrylate), tert-butylcyclohexyl (meth)acrylate, dicyclopentadienyl (meth)acrylate, dihydrodicyclopentadienyl (meth)acrylate, etc.), polymerizable amide compounds (e.g. (meth)acrylamide, N-methylol(meth)acrylamide, N,N-butoxymethyl(meth)acrylamide, N,N-dimethyl(meth)acrylamide, N,N-dibutyl(meth)acrylamide, N,N-dioctyl(meth)acrylamide, N-monobutyl(meth)acrylamide, N-monooctyl(meth)acrylamide, 2,4-dihydroxy-4'-vinylbenzophenone, N-(2-hydroxyethyl)acrylamide, N-(2-hydroxyethyl)methacrylamide, etc.), polymerizable aromatic compounds (e.g. styrene, α-methylstyrene, phenyl vinyl ketone, tert-butylstyrene, parachlorostyrene, vinylnaphthalene, etc.), polymerizable nitriles (e.g. acrylonitrile, methacrylonitrile, etc.), α-olefins (e.g. ethylene, propylene, etc.), vinyl esters (e.g. vinyl acetate, vinyl propionate, etc.), and dienes (e.g. butadiene, isoprene, etc.). One or more appropriate ones may be selected from among these according to the intended purpose of use thereof. For the purpose of providing hydrophilicity with ease, (meth)acrylamide is preferably used.

An amount of the above α,β-ethylenically unsaturated monomer other than the (meth)acrylate ester whose ester moiety contains one or two carbon atoms is less than 35% by weight in the α,β-ethylenically unsaturated monomer mixture.

An emulsion resin contained in the water-borne base coating composition according to the present invention is a resin obtained by emulsion polymerization of the above α,β-ethylenically unsaturated monomer mixture. The emulsion polymerization can be carried out using any of the conventional methods generally known in the art. Specifically, the emulsion polymerization can be carried out by dissolving an emulsifier in water or, if necessary, in an aqueous medium containing an organic solvent such as an alcohol, and adding dropwise the α,β-ethylenically unsaturated monomer mixture and a polymerization initiator with heating and stirring. The α,β-ethylenically unsaturated monomer mixture may be added dropwise in the form of an emulsion prepared in advance using an emulsifier and water.

Preferable polymerization initiator includes oil-soluble azo compounds (e.g. azobisisobutyronitrile, 2,2'-azobis(2-methylbutyronitrile), 2,2'-azobis(2,4-dimethylvaleronitrile- ), etc.) and water-soluble azo compounds (e.g. anionic 4,4'-azobis(4-cyanovaleric acid), 2,2'-azobis(N-(2-carboxyethyl)-2-methylpropionamidine and cationic 2,2'-azobis(2-methylpropion- amidine)); as well as oil-soluble peroxides (e.g. benzoyl peroxide, parachlorobenzoyl peroxide, lauroyl peroxide, tert-butyl perbenzoate, etc.) and water-soluble peroxides (e.g. potassium persulfate, ammonium peroxide, etc.) in redox systems.

The above-mentioned emulsifier may be any of those well known to those skilled in the art. In particular, reactive emulsifiers, such as Antox MS-60 (trademark, product of Nippon Nyukazai), Eleminol JS-2 (trademark, product of Sanyo Chemical Industries), Adeka Reasoap NE-20 (trademark, product of Asahi Denka Kogyo), Aqualon HS-10 (trademark, product of Dai-ichi Kogyo Seiyaku) and the like, are preferred.

A chain transfer agent, such as a mercaptan like laurylmercaptan or α-methylstyrene dimer, may be used for molecular weight adjustment when it is necessary.

The reaction temperature depends on the polymerization initiator, and the polymerization is preferably carried out, for example, at 60 to 90 °C with azo initiators or 30 to 70 °C with redox system initiators. The reaction time is generally 1 to 8 hours. The content of the polymerization initiator relative to the whole amount of the α,β-ethylenically unsaturated monomer mixture is generally 0.1 to 5% by weight, preferably 0.2 to 2% by weight.

The above emulsion polymerization can be carried out in multiple steps such as two stage. Namely, a portion of the α,β-ethylenically unsaturated monomer mixture (hereinafter, "α,β-ethylenically unsaturated monomer mixture 1") is first subjected to emulsion polymerization, the remaining portion of the α,β-ethylenically unsaturated monomer mixture (hereinafter, "α,β-ethylenically unsaturated monomer mixture 2") is then added thereto, and the emulsion polymerization is further carried out.

For preventing flooding in after-mentioned stage (iii), it is preferred that the α,β-ethylenically unsaturated monomer mixture 1 contains an amide group-containing α,β-ethylenically unsaturated monomer. On that occasion, it is more preferred that the α,β-ethylenically unsaturated monomer mixture 2 be free of any amide group-containing α,β-ethylenically unsaturated monomer. Since the α,β-ethylenically unsaturated monomer mixture 1 and α,β-ethylenically unsaturated monomer mixture 2 combinedly constitute the above-mentioned α,β-ethylenically unsaturated monomer mixture, the above-mentioned requirements imposed on the α,β-ethylenically unsaturated monomer mixture should be satisfied by the sum total of the α,β-ethylenically unsaturated monomer mixture 1 and α,β-ethylenically unsaturated monomer mixture 2.

The thus-obtained emulsion resin may preferably have a mean particle diameter within the range of 0.01 to 1.0 µm. When the mean particle diameter is less than 0.01 µm, the workability in the step of application will be improved only to a lesser extent. When it exceeds 1.0 µm, the coating film obtained may possibly show a deteriorated appearance. This mean particle diameter can be adjusted by controlling the monomer composition and/or emulsion polymerization conditions. The mean particle diameter of the emulsion resin can be measured by dynamic light scattering method, for example, using UPA (Microtrac particle size distribution analysis) produced by NIKKISO Co., Ltd.

The above emulsion resin can be used at pH 5 to 10, if necessary by neutralizing with a base. This owes to the fact that the resin is highly stable in this pH range.
This neutralization is preferably carried out by adding a tertiary amine, such as dimethylethanolamine or triethylamine, to the system before or after emulsion polymerization.

The pigment contained in the water-borne base coating composition according to the invention includes luster color pigment and coloring pigment. The luster color pigment is not particularly restricted in its shape and it may be colored. Preferably, however, it is a scaly one having a mean particle diameter (D₅₀) of 2 to 50 µm and a thickness of 0.1 to 5 µm. The mean particle diameter of the luster color pigment can be measured by laser diffraction and scattering method, for example, using Microtrac particle size distribution analysis produced by NIKKISO Co., Ltd. One having a mean particle diameter within the range of 10 to 35 µm is excellent in luster, hence is more preferred. As specific examples, there may be mentioned color-free or colored luster components made of metal such as aluminum, copper, zinc, iron, nickel, tin, aluminum oxide, and alloy thereof, which may be mixture thereof. In addition, coherent mica pigments, white mica pigments and graphite pigments may also be mentioned.

The coloring pigment is not particularly limited and may include the above coloring pigment mentioned in the intermediate coating composition.

The concentration (PWC) of the all pigments contained in the water-borne base coating composition according to the invention is preferably 0.1 to 50% by weight, more preferably 0.5 to 40% by weight, still more preferably 1.0 to 30% by weight. When it exceeds 50% by weight, the appearance of the coating film obtained may possibly become deteriorated. The concentration (PWC) of the above-mentioned optically luster color pigment, among others, is generally not more than 18.0% by weight, preferably 0.01 to 15.0% by weight, more preferably 0.01 to 13.0% by weight. When it exceeds 18.0% by weight, the appearance of the coating film obtained may possibly become deteriorated.

The water-borne base coating composition according to the invention may further contain a curing agent. The curing agent includes those generally used in coatings, specifically melamine resins, blocked isocyanates, epoxy compounds, aziridine compounds, carbodiimide compounds, oxazoline compounds, etc. From the viewpoint of performance characteristics of resulting coating film and of cost, melamine resins and/or blocked isocyanates are preferred.

The above-mentioned melamine resins as curing agents are not particularly restricted. Thus, water-soluble melamine resins or water-insoluble melamine resins may be used. Among the melamine resins, those showing a water tolerance value of not less than 3.0 are preferably used from the coating stability viewpoint. The water tolerance value can be measured in the same manner as mentioned hereinbefore referring to the intermediate coating composition.

The above-mentioned blocked isocyanates include those which can be obtained by allowing a blocking agent having an active hydrogen atom to add to polyisocyanates such as trimethylene diisocyanate, hexamethylene diisocyanate, xylylene diisocyanate, isophoronediisocyanate and the like and which, upon heating, allow the blocking agent to be dissociated to generate an isocyanato group, which reacts with a functional group in the above-mentioned resin component to cause curing.

In cases where the water-borne base coating composition contains such a curing agent, the content thereof is preferably 20 to 100 parts by weight per 100 parts by weight of the coating resin solids from the curability viewpoint.

The water-borne base coating composition according to the invention may also contain other coating film-forming resins as necessary. Such are not particularly restricted, but acrylic resins, polyester resins, alkyd resins, epoxy resins, urethane resins and like coating film-forming resins can be utilized.

The above-mentioned other coating film-forming resin preferably has a number average molecular weight of 3000 to 50000, more preferably 6000 to 30000. When the above-mentioned number average molecular weight is less than 3000, the workability in the step of coating and the curability may be insufficient. When it exceeds 50000, the unvolatile matter content in the step of application becomes too low; hence the workability in the step of coating may conversely decrease.

The other coating film-forming resin preferably has an acid group, and the resin solid acid value (based on solid content) is preferably 10 to 100 mg KOH/g, more preferably 20 to 80 mg KOH/g. When it is above the upper limit, the performance characteristics of the coating film obtained may possibly be deteriorated. When the acid value is less than the lower limit, the dispersibility of the resin in water may decrease. In addition, the other coating film-forming resin may preferably have a hydroxyl group, and the hydroxyl value (based on solid content) is preferably 20 to 180, more preferably 30 to 160. When it exceeds the above upper limit, the water resistance of resulting coating film may deteriorate. When the hydroxyl value is less than the above lower limits, the curability of the resulting coating film may decrease.

In cases where the water-borne base coating composition according to the invention contains such other coating film-forming resin, the content of the above emulsion resin based on the total solid amount of resin components is preferably 5 to 95% by weight, more preferably 10 to 85% by weight, still more preferably 20 to 70% by weight, and the content thereof based on the total solid amount of resin components is preferably 95 to 5% by weight, more preferably 90 to 15% by weight, still more preferably 80 to 30% by weight. When the content of the emulsion resin is less than 5% by weight, the workability in coating becomes unsatisfactory. When the content of the emulsion resin exceeds 95% by weight, formability of coating film will deteriorate.

The above-mentioned other coating film-forming resin may preferably be water-soluble acrylic resin. This owes to the fact that the acrylic resin is compatible with the emulsion resin. The water-soluble acrylic resin can be prepared by solution polymerization using α,β-ethylenically unsaturated monomer having acid group as an essential component and the other α,β-ethylenically unsaturated monomer. It may be preferred that components used in the above solution polymerization contains at least 65% by weight of a (meth)acrylate ester whose ester moiety contains one or two carbon atoms in view of resulting coating appearance.

The above-mentioned other coating film-forming resin is usually dissolved in water by neutralization using a base component including an organic amine such as monomethylamine, diethylamine, trimethylamine, triethylamine, diisopropylamine, monoethanolamine, diethanolamine and dimethylethanolamine.
The neutralization may be performed directly to the other coating film-forming resin, or may be performed in the preparation of the water-borne base coating composition.

The water-borne base coating composition according to the invention may further contain a polyether polyol. Containing the polyether polyol can provide increasing of flip-flop performance of the resulting multi-layered coating film, which can achieve excellent improvement of coating appearance.

The polyether polyol preferably has at least one primary hydroxyl group per molecule, and may have a number average molecular weight of 300 to 3000, a hydroxy value of 30 to 700, and a water tolerance value of equal or more than 2.0. Using polyether polyol which fails to fulfill the above parameters may provide derogations of water resistance or coating appearance.

As the polyether polyol, adduct compounds may be used, which is obtained by reacting a compound having active hydrogen group such as polyvalent alcohol, polyvalent phenol and polyvalent carboxylic acid, with alkylene oxide such as ethylene oxide and propylene oxide. Examples of the polyether polyol include commercially available compound, for example, Primepol PX-1000, Sannix SP-750 (all trademarks, products of Sanyo Chemical Industries), and PTMG-650 (trademark, product of Mitsubishi Chemical).

In cases where the water-borne base coating composition according to the invention contains such a polyether polyol as mentioned above, the content thereof is preferably 1 to 40% by weight, more preferably 3 to 30% by weight.

In the water-borne base coating composition, there may be incorporated, in addition to the above-mentioned components, one or more of other additives generally used in coatings, for example, thickening agents. The additives are not particularly limited and may be used the additives mentioned in the intermediate coating composition.

### Preparation of water-borne base coating composition and forming of uncured base coating film

A method for preparing the water-borne base coating composition is not particularly restricted, and may be any of all the methods well known to those skilled in the art, for example the method including mixing or dispersing the above components using a kneader or roll, a disper homogenizer or sand grinding mills mentioned the above intermediate coating composition.

A total solid content of the water-borne coating composition during coating may preferably be 10 to 60% by weight. When the content is out of this range, deterioration in coating stability may be occurred. In addition, when the content is less than 10% by weight, the viscosity may be too low, and appearance inferiors such as flooding and mottling may be occurred. When the content is more than 60% by weight, the viscosity may be too high, and which may lead to deteriorated appearance of the coating film. The total solid content of the intermediate coating composition may more preferably be 15 to 50% by weight, which can provide excellent coating appearance.

Applying method of the water-borne base coating composition includes, but not particularly limited to, a coating method mentioned in the intermediate coating composition. A film thickness of the base coating films using the base coating composition are usefully 5 to 35 µm as dry coating film thickness.

The base coating film obtained by the above stage (ii) is in an uncured state. In this stage, preheating mentioned in the stage (i) may be preferably carried out after the above stage (ii). The preheating can volatilize volatile components such as organic solvents contained in the intermediate coating composition, which can prevent flooding between the uncured intermediate coating film and an uncured base coating film obtained in the following stage (iii) to obtain a multi-layered coating film having excellent gloss. The method of the present invention moves on the following stage (iii) after the above stage (ii), or optional preheating after the above stage (ii).

### STAGE (iii)

The stage (iii) forms an uncured clear coating film on the uncured base coating film by applying a clear coating composition on the uncured base coating film obtained by the stage (ii).

### CLEAR COATING COMPOSITION

A clear coating composition used in the present invention includes, but is not particularly limited to, a coating composition containing a coating resin component and an optional curing agent. The clear coating composition may contain a coloring pigment as far as coating appearance of the base coating film is not obstructed. The clear coating composition encompasses various forms such as a solvent-borne type, a water-borne type and a powder type.

In case that the clear coating composition is a solvent-borne clear coating composition, a preferable clear coating composition includes a composition in a combination of an acryl resin and/or a polyester resin and an amino resin and/or isocyanate, or an acryl resin and/or a polyester resin in an epoxy curing system by using a carboxylic acid, etc. These clear coating compositions are preferable from some aspects such as transparency and acid etch resistance.

In case that the clear coating composition is a water-borne clear coating composition, a coating resin component in the water-borne clear coating composition includes an aqueous resin which is obtained by neutralizing the coating resin components mentioned in the solvent-borne clear coating composition with a base. The neutralization may be conducted by adding a tertiary amine such as dimethylethanolamine or triethylamine before/after the polymerization.

In case that the clear coating composition is in a powder type, a preferable clear coating composition includes a conventional powder coating composition such as a thermoplastic or thermosetting powder coating composition. A preferable clear powder coating composition is a thermosetting powder coating composition, which has an advantage that the resulting coating film has excellent properties. The specific thermosetting powder coating composition includes an epoxy-type, acryl-type or polyester-type of the clear powder coating composition, etc. A preferable powder coating composition is an acryl type clear powder coating composition which can provide an excellent weather-resistance.

A conventional additive for a coating composition may be further added to the clear coating composition employed in the present invention, such as viscosity control agents. A thixotropic component may be used as the viscosity control agents. The viscosity control agents mentioned in the water-borne coating composition may be used. The clear coating composition may contain curing agents and surface conditioners, etc.

### forming of uncured clear coating film

A method of preparing the clear coating composition is not particularly restricted but may be any of all the methods well known to those skilled in the art, for example the method comprising mixing or dispersing the above components using a kneader or roll, a disper homogenizer or sand grinding mills mentioned the above intermediate coating composition. A film thickness of the clear coating films using the clear coating composition are usefully 10 to 80 µm as dry coating film thickness.

The clear coating film obtained by the above stage (iii) is in an uncured state. The method of the present invention moves on the following a step (2) after the above stage (iii), or optional setting for some minutes after the above stage (iii).

### STEP (2)

Step (2) is a step of baking and curing the uncured intermediate coating film, the uncured base coating film and the uncured clear coating film of the step (1) at the same time to obtain a multi-layered coating film.

Temperature for the heating and curing is not particularly limited, and is generally 100 to 180 °C, and more preferably 130 to 160 °C. Time for heating and curing may be varied depend on the temperature, and is preferably 10 to 30 minutes in case that the temperature is 130 to 160 °C.

Thickness of the multi-layered coating film according to the present invention is preferably 30 to 300 µm. When the thickness is less than 30 µm, the film strength may be decreased. When the thickness is more than 300 µm, the film properties may be decreased. Thickness of the multi-layered coating film may preferably be 50 to 250 µm.

The present invention has characteristic of obtaining the multi-layered coating film having excellent coating appearance in the three-coat and one-bake method. The three-coat and one-bake coating method can provide curtailment of a baking and drying oven for an intermediate coating film in comparison with a two-coat and one-bake coating method, which can provide shortening of coating line and has cost advantage of coating facility. The three-coat and one-bake coating method also has an advantage of energy expenditure for coating and can provide economic advantage because the coating method has curtailment of a baking and drying oven for an intermediate coating film. In the method of the present invention, formation of multi-layered coating film excellent in gloss and in appearance by three-coat and one-bake coating method including cost and economic advantage can be achieved, which can provide a multi-layered coating film having excellent coating appearance at the same level as ones by two-coat and one-bake coating method.

The following examples illustrate the present invention more specifically. These examples are, however, by no means limitative of the scope of the invention. In the examples, "part(s)" means "part(s) by weight", unless otherwise specified.

### EXAMPLE

### Production Example 1: Production of emulsion resin

To a reaction vessel equipped with a stirrer, a thermometer, a dropping funnel, reflux condenser and nitrogen-introducing tube, 135.4 parts of ion-exchanged water was charged and heated to 80 °C with stirring. To the reaction vessel, monomer mixture 1 composed of 30.21 parts of methyl acrylate, 27.37 parts of ethyl methacrylate, 7.42 parts of 2-hydroxyethyl methacrylate, 5.0 parts of ethylene glycol dimethacrylate, 0.5 part of Aqualon HS-10 (an emulsifying agent, product of Dai-ichi Kogyo Seiyaku), 0.5 part of Adeka Reasoap NE-20 (an emulsifying agent, product of Asahi Denka Kogyo, solid content 80% by weight) and 49.7 parts of ion-exchanged water, and initiator solution composed of 0.21 part of ammonium persulfate and 8.6 parts of ion-exchanged water were added dropwise in parallel over 2 hours. After completion of the dropping, the temperature was kept for 1 hour.

Further, monomer mixture 2 composed of 23.54 parts of methyl methacrylate, 1.86 parts of 2-hydroxyethyl methacrylate, 1.55 parts of methacrylic acid, 3.05 parts of ethylene glycol dimethacrylate, 0.2 part of Aqualon HS-10 and 24.7 parts of ion-exchanged water, and an initiator solution composed of 0.08 part of ammonium persulfate and 7.4 parts of ion-exchanged water were added dropwise in parallel to the reaction vessel at 80 °C over 0.5 hour. After completion of the dropping, the temperature was kept for 2 hour. An acid value (solid content) based on the sum of the monomer mixture 1 and the monomer mixture 2 was 10 mg KOH/g.

Then, the reaction mixture was cooled to 40 °C and then filtered through a 400-mesh filter. Further, the pH was adjusted to 6.5 by addition of 2.14 parts of ion-exchanged water and 0.24 part of dimethylaminoethanol. An emulsion resin with a nonvolatile content of 30% and a hydroxyl value (solid content) of 40 was thus obtained.

Production example 2: Production of water-borne coating composition
Alumipaste MH8801 (aluminum pigment, product of Toyo Aluminum K. K.) (19.0 parts), 183.3 parts of the emulsion resin obtained in the production example 1, 33.3 parts of water-soluble acryl resin with an acid value (solid content) of 50 mg KOH/g and a solid content of 30%, and 31.25 parts of Cogum HW-62 (polyacrylamide, product of Show Highpolymer Co., Ltd., a solid content of 15%) were mixed. Then, 60.0 parts of Neorez R960 (urethane emulsion, product of Avecia Limited, a solid content of 33%) and 5.0 parts of 10% aqueous solution of dimethyl ethanol amine were added and mixed to obtain a water-borne base coating composition. The base coating composition was diluted with deionized water to a viscosity of 45 seconds (measured at 20 °C using a No. 4 Ford cup).

### Production example 3: Production of a nonaqueous dispersion

### (a) Production of a dispersion stabilizing resin

A container equipped with a stirrer, a temperature controller and a reflux condenser was charged with 90 parts of butyl acetate. Next, 20 parts of a solution mixture A prepared by mixing of 38.9 parts of methylmethacrylate, 38.8 parts of stearylmethacrylate, 22.3 parts of 2-hydroxyethylacrylate and 5.0 parts of azobisisobutyronitrile was added and the mixture was heated with stirring to raise the temperature of the mixture. When the temperature of the mixture reached 110°C, the remainder 85 parts of the above solution mixture A was added dropwise to the above reaction mixture for 3 hours and a solution containing 0.5 parts of azobisisobutyronitrile and 10 parts of butyl acetate was added dropwise to the resulting mixture for 30 minutes.
The reaction solution was further stirred under refluxing for 2 hours to raise the rate of conversion into a resin, and then the reaction was terminated, to obtain an acryl resin having a solid content of 50% and a number average molecular weight of 5600.

### (b) Production of a nonaqueous dispersion

A container equipped with a stirrer, a cooler and a temperature controller was charged with 90 parts of butyl acetate and 120 parts (solid content: 60 parts) of the acryl resin obtained in the above "(a) Production of a dispersion stabilizing resin". Next, a solution mixture B composed of 7.0 parts of styrene, 1.8 parts of methacrylic acid, 12.0 parts of methylmethacrylate, 8.5 parts of ethylacrylate, 40.7 parts of 2-hydroxyethylacrylate and 1.4 parts of azobisisobutyronitrile was added dropwise to the above mixture at 100°C for 3 hours. Then, a solution containing 0.1 parts of azobisisobutyronitrile and 1 part of butyl acetate was added to the above mixture for 30 minutes. When the reaction solution was stirred for further 1 hour, an emulsion having a solid content of 60% and a particle diameter of 180 nm was obtained. This emulsion was diluted with butyl acetate to obtain a nonaqueous dispersion containing 40% by weight of resin components having a viscosity of 300 cps (25°C) and a particle diameter of 180 nm. Tg and hydroxyl value (solid content) of this nonaqueous dispersion resin were 23°C and 162 respectively.

### Example 1

### Production of an intermediate coating composition 1

A one-liter vessel was charged with 107 parts of an urethane-modified polyester resin 1 (a number average molecular weight of 2000, an acid value (solid content) of 20 mg KOH/g, a hydroxyl value (solid value) of 100, content of isophthalic acid in an acid component of polycondensation for preparation of a hydroxyl group-containing polyester resin (before urethane-modification): 89 mol%, Tg of a hydroxyl group-containing polyester resin (before urethane-modification):60 °C, water tolerance value of 6.8 ml, a solid content of 70%), 280 parts of CR-97 (titanium dioxide, product of ISHIHARA SANGYO KAISHA, Ltd.), 13 parts of MA-100 (carbon black pigment, product of Mitsubishi Chemical Co., Ltd.), 7 parts of LMS-100 (scaly talc, product of Fuji Talc Industrial Co., Ltd., long diameter of 8 µm, a number-average diameter of 5µm), 47 parts of butyl acetate and 47 parts of xylene. GB503 M (particle diameter: 1.6 mm, glass beads) was poured in the same amount as the charge weight into the mixture. The mixture was dispersed at room temperature by using a bench SG mill for 3 hours to obtain a gray pigment paste. The grain size measured by a grind gage was 5 µm or less when the dispersion operation was finished. The glass beads were removed by filtration to obtain a pigment paste.
To 100 parts of the above paste, 74.6 parts of the above urethane-modified polyester resin 1, 44.1 parts of a melamine resin 1 (a number average molecular weight of 1600, a weight average molecular weight of 6200, a hexane tolerance value of 14.8 ml) and 44.1 parts of a blocked isocyanate (trade name: Duranate MF-K60X, manufactured by Mitsui Chemicals, Inc., solid content: 60%) and 53 parts of the nonaqueous dispersion obtained in the above Production Example 3 were added to obtain a intermediate coating composition. This composition was diluted with a mixture solvent of Solvesso 100 (product of Exxon Corporation) / ethyl acetate = 7/3 by using a No. 4 Ford cup to 18 seconds/20°C.

### Formation of multi-layered coating film

To a dull stainless plate which had been subjected to zinc phosphate chemical treatment and electrodeposition coating, the above intermediate coating composition 1 was applied by air spraying such that a thickness of a dry coating film was about 20 µm. The above coated plate to which the uncured intermediate composition was applied was allowed to stand at room temperature for 10 minutes after the intermediate coating composition was applied. The above base coating composition was applied to the plate by air spraying such that the dry film thickness was 10 µm. The resulting coated plate was preheated at 80 °C for 3 minutes to make a base coating film.

Then, a clear coating composition (trade name: Macflow O-1600, manufactured by Nippon paint Co., Ltd.) that was diluted with a mixture solvent of ethoxyethyl propyonate / Solvesso 100 = 1/1 in advance to 20 seconds/20°C by using a No. 4 Ford cup was applied by sir spraying such that the dry film thickness was 35mm.

The coated plate formed with the uncured intermediate coating film, the uncured base coating film and the uncured clear coating film was baked at 140°C for 30 minutes to obtain a multi-layered coating film.

### Example 2

An intermediate coating composition (intermediate coating composition 2) was prepared in the same manner as in Example 1 except that melamine resin 1 was altered to melamine resin 2 (a number average molecular weight of 1200, a weight average molecular weight of 2900, a hexane tolerance value of 10.8 ml) shown in the Table 1, and was diluted in the same manner as in Example 1.

Then a test plate having a multi-layered coating film was formed in the same manner as in Example 1 except that the above intermediate coating composition 2 (diluted) was used in place of the intermediate coating composition 1 in the Example 1.

### Comparative example 1

An intermediate coating composition (intermediate coating composition 3) was prepared in the same manner as in Example 1 except that melamine resin 1 was altered to melamine resin 3 (trade name:U-VAN 128, product of Mitsui Chemicals, INC., a number average molecular weight of 1650, a weight average molecular weight of 3700, a hexane tolerance value of 44.6 ml, solid content: 60%), and was diluted in the same manner as in Example 1.

Then a test plate having a multi-layered coating film was formed in the same manner as in Example 1 except that the above intermediate coating composition 3 (diluted) was used in place of the intermediate coating composition 1 in the Example 1.

### Comparative example 2 and 3

Intermediate coating compositions (intermediate coating composition 4 and 5) were prepared in the same manner as in Example 1 except that melamine resin 1 was altered to melamine resin 3, and the urethane-modified polyester resin 1 was altered to an urethane-modified polyester resin 2 (trade name WAF-272, product of DIC corporation, a number average molecular weight of 2000, a weight average molecular weight of 6000, an acid value (solid content) of 10 mg KOH/g, a hydroxyl value (solid value) of 100, water tolerance value of 3.2 ml, a solid content of 70%) or an urethane-modified polyester resin 3 (a number average molecular weight of 2000, a weight average molecular weight of 6000, an acid value (solid content) of 25 mg KOH/g, a hydroxyl value (solid value) of 100, water tolerance value of 12.3 ml, a solid content of 70%), and were diluted in the same manner as in Example 1.

Then a test plate having a multi-layered coating film was formed in the same manner as in Example 1 except that the above intermediate coating composition 4 or 5 (diluted) was used in place of the intermediate coating composition 1 in the Example 1.

### Comparative example 4

An intermediate coating composition (intermediate coating composition 7) was prepared in the same manner as in Example 1 except that the urethane-modified polyester resin 1 was altered to an urethane-modified polyester resin 2, and was diluted in the same manner as in Example 1.

Then a test plate having a multi-layered coating film was formed in the same manner as in Example 1 except that the above intermediate coating composition 7 (diluted) was used in place of the intermediate coating composition 1 in the Example 1.

### Comparative example 5

An intermediate coating composition (intermediate coating composition 8) was prepared in the same manner as in Example 1 except that melamine resin 1 was altered to melamine resin 4 (trade name: Cymel 327, product of Nihon Cytec Industries Inc., a number average molecular weight of 410, a weight average molecular weight of 450, a water tolerance value of 5.7 ml, a hexane tolerance value of 7.5 ml, solid content: 90%), and was diluted in the same manner as in Example 1.

Then a test plate having a multi-layered coating film was formed in the same manner as in Example 1 except that the above intermediate coating composition 8 (diluted) was used in place of the intermediate coating composition 1 in the Example 1.

### Evaluation

The obtained multi-layered coating films in the Examples 1, 2 and Comparative examples 1 to 5 were subjected to the following tests. Obtaining evaluation results are shown in Table 1.

### (1) Smoothing

The finish of the appearance of the multi-layered coating film was evaluated by visual inspection. The evaluation standard is as follows.
a: Having excellent smoothing.
b: Having little crinkle.
c: Having sizable crinkle.

### (2) State of flooding

The finish of the appearance of the multi-layered coating film was evaluated by visual inspection. The evaluation standard is as follows.
a: Having no flooding.
b: Having a little flooding.
c: Being completely flooded.

**Table 1**

| | | Examples | | Comparative examples | | | | |
|---|---|---|---|---|---|---|---|---|
| | | 1 | 2 | 1 | 2 | 3 | 4 | 5 |
| No. of the urethane modified polyester resin | | 1 | 1 | 1 | 2 | 3 | 2 | 1 |
| Water tolerance value [ml] | | 6.8 | 6.8 | 6.8 | 3.2 | 12.3 | 3.2 | 6.8 |
| No. of the melamine resin | | 1 | 2 | 3 | 3 | 3 | 1 | 4 |
| Hexane tolerance value [ml] | | 14.8 | 10.8 | 44.6 | 44.6 | 44.6 | 14.8 | 7.5 |
| coating appearance | smoothing | a | a | a | b | c | b | c |
| | bleeding | a | a | c | c | b | b | a |

Shown in Table 1, the multi-layered coating films obtained by the method for forming the multi-layered coating film using the solvent-borne intermediate coating composition containing the urethane-modified polyester resin (a), the melamine resin (b), the blocked isocyanate compound (c), the nonaqueous dispersion resin (d), and the flat pigment (e) and the water-borne base coating composition containing the emulsion resin and the pigment have excellent coating appearance because of having excellent smoothing and no bleeding between the intermediate coating film and the base coating film (showin in the Examples 1 and 2).

On the other hand, the multi-layered coating films in Comparative examples obtained by using the solvent-borne intermediate coating composition containing the urethane-modified polyester resin and/or the melamine resin having outlying parameters have inferior coating appearance because of having inferior smoothing and/or bleeding between the intermediate coating film and the base coating film.

### INDUSTRIAL APPLICABILITY

The method for forming a multi-layered coating film of the present invention can be used for three-coat and one-bake coating method for automobiles. The multi-layered coating film obtained by the method of the present invention can be used in automobiles.

## Claims

1. A method for forming a multi-layered coating film, which comprises
a step (1) of successively coating, on an elecrocoating film formed on a substrate, of an intermediate coating composition, a base coating composition and a clear coating composition formed thereon to form an uncured intermediate coating film, an uncured base coating film and an uncured clear coating film, and
a step (2) of baking and curing the uncured intermediate coating film, the uncured base coating film and the uncured clear coating film of step (1) at the same time, wherein
the intermediate coating composition is a solvent-borne intermediate coating composition comprises:
40 to 56% by weight of an urethane-modified polyester resin (a) having a number average molecular weight (Mn) of 1500 to 3000 and a water tolerance value of 4 to 10 ml at 23 °C, obtained by reacting an aliphatic diisocyanate compound with a hydroxyl group-containing polyester resin having a glass transition temperature (Tg) of 40 to 80 °C, the polyester being obtained by polycondensation of an acid component containing 80 mol% or more of isophthalic acid with a polyhydric alcohol;
10 to 30% by weight of a melamine resin (b) having a hexane tolerance value of 8 to 40 ml;
15 to 30% by weight of a blocked isocyanate compound (c) obtained by a blocking reaction of a compound having an active methylene group with hexamethylene diisocyanate or an isocyanate compound obtained by reacting hexamethylene diisocyanate with a compound reacted with the hexamethylene diisocyanate, and;
4 to 15% by weight of a nonaqueous dispersion resin (d) having a core-shell structure;
provided that amounts of (a) to (d) are on the bases of a resin solid content; and
0.4 to 2 parts by weight of a flat pigment (e) having a long diameter of 1 to 10 µm and a number average particle diameter of 2 to 6 µm, which the parts by weight of the flat pigment (e) is based on 100 parts by weight of the resin solid content; and wherein
the base coating composition is a water-borne base coating composition comprising:
an emulsion resin obtained by emulsion polymerization of an α,β-ethylenically unsaturated monomer mixture having an acid value of 3 to 50 mg KOH/g and comprising at least 65% by weight of a (meth)acrylate ester whose ester moiety contains one or two carbon atoms, and
a pigment.

2. A multi-layered coating film obtainable from the method for forming a multi-layered coating film of Claim 1.
